# EUROPÄISCHE PATENTSCHRIFT

(11) **EP 1 945 681 B1**
(45) Veröffentlichungstag und Bekanntmachung des Hinweises auf die Patenterteilung: **10.12.2014**
(21) Anmeldenummer: 06828906.5
(22) Anmeldetag: 02.11.2006
(51) Int. Cl.: C08F 10/02, C08F 4/6192

(54) **VERFAHREN ZUR HERSTELLUNG VON ULTRAHOCHMOLEKULAREN POLYMEREN UNTER VERWENDUNG VON SPEZIELLEN VERBRÜCKTEN METALLOCEN-KATALYSATOREN**
METHOD FOR PRODUCING ULTRA-HIGH MOLECULAR WEIGHT POLYMERS BY MEANS OF SPECIAL BRIDGED METALLOCENE CATALYSTS
PROCEDE DE PRODUCTION DE POLYMERES DE POIDS MOLECULAIRE TRES ELEVE AU MOYEN DE CATALYSEURS METALLOCENES PONTES SPECIAUX

(30) Priorität: 04.11.2005 DE 102005052654
(43) Veröffentlichungstag der Anmeldung: 23.07.2008
(73) Patentinhaber: Ticona GmbH, 65451 Kelsterbach (DE)
(72) Erfinder: EHLERS, Jens, 46499 Hamminkeln (DE); PANITZKY, Jens, 46286 Dorsten (DE); DICKNER, Tim, 60486 Frankfurt (DE); SCHOTTEK, Jörg, 65510 Isdtein (DE)
(74) Vertreter: Zimmermann & Partner
(86) Internationale Anmeldenummer: PCT/EP2006/010511
(87) Internationale Veröffentlichungsnummer: WO 2007/051612

(56) Entgegenhaltungen:
- EP-A1- 0 646 604
- EP-A2- 0 643 078
- WO-A-03/045551
- WO-A-2006/060544
- WO-A-2006/100258
- WO-A-2006/100269
- WO-A-2006/124231
- WO-A1-94/28034
- DE-A1- 19 622 207
- DE-A1- 19 804 970
- DE-A1- 19 823 172
- DE-A1-102004 035 308

## Beschreibung

Die vorliegende Erfindung betrifft ein Verfahren zur Herstellung von ultrahochmolekularen Polymeren durch Polymerisation und Copolymerisation von Olefinen unter Verwendung von Katalysatoren sowie deren Katalysatorsystemen.

Von ultrahochmolekularen Polymeren des Ethylens spricht man bei einem viskosimetrisch ermittelten Molekulargewicht von größer 1 x 10⁶ mol/g. Solche Polymere finden aufgrund ihrer außergewöhnlichen Eigenschaften wie hoher Abriebsbeständigkeit und geringer Gleitreibung vielfältige Verwendung. So finden sie Einsatz in der Fördertechnik, im Schüttguthandling und auch in der Medizintechnik als Gelenkpfannen in künstlichen Gelenken.

Aufgrund dieser speziellen Eigenschaften ist die Verarbeitung von ultrahochmolekularem Polyethylen sehr aufwendig. Verwendete Verfahren für die Fertigung von Formteilen sind die Ramm-Extrusion und das Druck-Pressen von pulverförmigen Ausgangstoffen, wobei die hergestellten Formteile häufig noch Charakteristika der Ausgangspulver aufweisen. Filme und Fasern werden durch sogenannte Lösungs- bzw. Gel-Prozesse gewonnen, welche eine große Menge an Lösungsmitteln benötigen. Ein Ziel ist es daher neue ultrahochmolekulare Polyethylene zu entwickeln, welche sich durch verbesserte Verarbeitbarkeit auszeichnen.

Nach dem heutigen Stand der Technik werden ultrahochmolekulare Polyethylene nach dem Niederdruckverfahren mit heterogenen sogenannten Ziegler-Katalysatoren hergestellt. Solche Katalysatoren werden zum Beispiel in den folgenden Patentschriften beschrieben: EP186995, DE3833445, EP575840 und US20020045537.

Andere bekannte Katalysatoren zur Olefinpolymerisation sind sogenannte "Single-site"-Katalysatoren. Nach dem heutigen Stand der Technik lassen sich ultrahochmolekulare Polymere mit ihnen nur in Ausnahmefällen und unter wirtschaftlich unrentablen Bedingungen herstellen. So bilden sogenannte "Constrained-geometry"-Katalysatoren ultrahochmolekulare Polyethylene in heterogener Phase nur mit moderaten Aktivitäten und erhöhten Langkettenverzweigungen, welche zu geringerer Härte und schlechterem Abriebverhalten führen können. Mit sogenannten Phenoxy-Imin-Katalysatoren werden UHMWPE nur mit geringen Aktivitäten in wirtschaftlich unrentablen Temperaturbereichen erhalten. Beispiele hierfür und auch für andere Metallocene sind in WO9719959, WO0155231, Adv. Synth. Catal. 2002, 344, 477-493, EP0798306 und auch in EP0643078 beschrieben.

Überraschenderweise wurden nun verbrückte "Single-site"-Katalysatoren mit einer geeigneten Liganden-Struktur gefunden, welche in Verbindung mit Aluminoxanen als Co-Katalysatoren nicht nur die Herstellung von ultrahochmolekularen Polyethylenen mit einem viskosimetrisch ermittelten Molekulargewicht von größer 1 x 10⁶ mol/g erlauben, sondern auch Produkte mit einer verbesserten Verarbeitbarkeit liefern. Die Ursache für die verbesserte Verarbeitbarkeit liegt, ohne an eine Theorie gebunden zu sein, in der engeren Molekulargewichtsverteilung Mw/Mn von 2 bis 6 im Vergleich zu Polymeren, die mittels Ziegler Katalyse hergestellt wurden und eine Molekulargewichtsverteilung Mw/Mn von 3 bis 30 aufweisen.

Das erfindungsgemäße Verfahren widerlegt zudem das Vorurteil, dass in Verbindung mit Aluminoxanen als Co-Katalysatoren eine wirtschaftliche Herstellung von ultrahochmolekularen Polymeren nicht möglich ist. Der Katalysator ist durch seine spezielle Ligandenstruktur sterisch hinreichend gegen den Hauptmechanismus für die Entstehung niedermolekularer Produkte, nämlich die Kettenübertragung an das Aluminoxan abgeschirmt, ohne jedoch seine wirtschaftlich notwendige Aktivität gegenüber den Monomeren zu verlieren.

Gegenstand der vorliegenden Erfindung ist ein Verfahren zur Herstellung von ultrahochmolekularen Homo- oder Co-Polymeren, umfassend hauptsächlich Ethylen mit einem viskosimetrisch ermittelten Molekulargewicht von größer 1x10⁶ g/mol durch Polymerisation von Ethylen unter Verwendung eines Katalysatorsystems, welches eine Verbindungen der Formel I umfasst 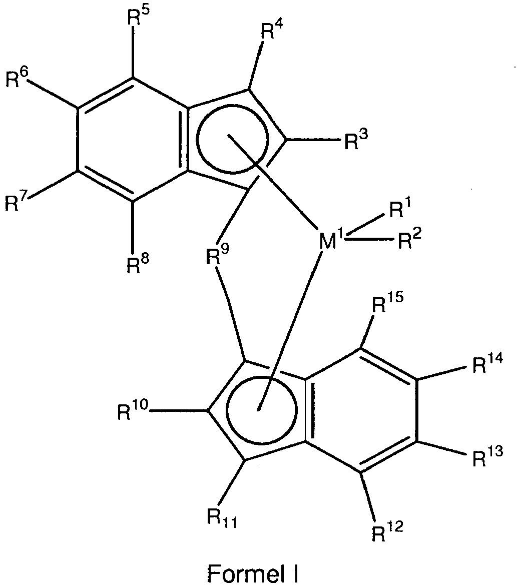 worin:
- M¹: ein Übergangsmetall der 4. Gruppe des Periodensystems der Elemente bedeutet dessen Oxidationstufe ungleich null ist;
- R¹: gleich Wasserstoff oder eine C₁-C₂₀ - kohlenstoffhaltige Gruppe oder ein Halogenatom ist;
- R²: gleich Wasserstoff oder eine C₁-C₂₀ - kohlenstoffhaltige Gruppe oder ein Halogenatom ist;
- R³: eine C₂-C₂₀ -kohlenstoffhaltige Gruppe ist, dadurch gekennzeichnet, dass R³ eine in α- oder β-Position cyclisierte oder eine in α- oder β-Position verzweigte kohlenstoffhaltige Gruppe ist;
- R¹⁰: eine C₁-C₁₀ -kohlenstoffhaltige Gruppe ist;
- R⁴, R⁶, R⁷, R⁸, R¹¹, R¹³, R¹⁴, R¹⁵: jeweils gleich Wasserstoff ist;
- R⁵, R¹²: jeweils gleich oder verschieden sind und eine C₁-C₂₀ kohlenstoffhaltige Gruppe sind, und
- R⁹: eine Brücke zwischen den Liganden bildet, welche durch folgende Formeln gebildet werden kann: 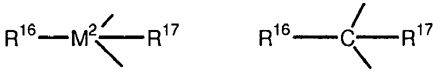 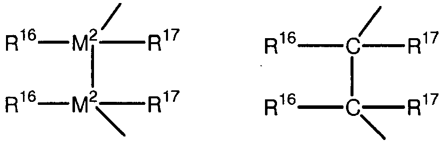
worin:
- M²: Silizium ist; und
- R¹⁶, R¹⁷: jeweils gleich oder verschieden sind und gleich Wasserstoff oder eine C₁-C₂₀ - kohlenstoffhaltige Gruppe oder ein Halogenatom sind.

Im Rahmen der vorliegenden Erfindung werden unter einer C₁-C₂₀-kohlenstoffhaltigen Gruppe bevorzugt die Reste
C₁-C₂₀-Alkyl, besonders bevorzugt Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl,
C₁ - C₂₀ - Alkenyl, besonders bevorzugt Ethenyl, Propenyl, Butenyl, Pentenyl, Cyclopentenyl, Hexenyl, Cyclohexenyl, Octenyl oder Cyclooctenyl,
C₁ - C₂₀ - Alkinyl, besonders bevorzugt Ethinyl, Propinyl, Butinyl, Pentinyl, Hexinyl oder Octinyl, C₆-C₂₀-Aryl, besonders bevorzugt Benzyliden, o-Methoxybenzyliden, 2,6-Dimethylbenzyliden, Phenyl, Biphenyl, Naphthyl, Anthracenyl, Triphenylenyl, [1,1';3',1"]Terphenyl-2'-yl, Binaphthyl oder Phenanthrenyl,
C₁ - C₂₀ - Fluoralkyl, besonders bevorzugt Trifluormethyl, Pentafluorethyl oder 2,2,2-Trifluorethyl,
C₆-C₂₀-Fluoraryl, besonders bevorzugt Pentafluorophenyl, 3,5-Bistrifluoromethylphenyl, Pentafluorobenzyliden, 3,5-Bistrifluoromethylbenzyliden, Tetrafluörophenyl oder Heptafluoronaphthyl,
C₁-C₂₀-Alkoxy, besonders bevorzugt Methoxy, Ethoxy, n-Propoxy, i-Propoxy, n-Butoxy, i-Butoxy, s-Butoxy oder t-Butoxy,
C₆-C₂₀-Aryloxy, besonders bevorzugt Phenoxy, Naphthoxy, Biphenyloxy, Anthracenyloxy, Phenanthrenyloxy,
C₇-C₂₀-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl,
C₇-C₂₀-Alkylaryl, besonders bevorzugt Benzoyl, Ethylphenyl, Propylphenyl, Diphenylmethyl, Triphenylmethyl oder Naphthalinylmethyl,
C₇-C₂₀-Aryloxyalkyl, besonders bevorzugt o-Methoxyphenyl, m-Phenoxymethyl, p-Phenoxymethyl,
C₁₂-C₂₀-Aryloxyaryl, besonders bevorzugt p-Phenoxyphenyl, C₅-C₂₀-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl,
C₄-C₂₀-Heterocycloalkyl, besonders bevorzugt Furyl, Benzofuryl, 2-Pyrolidinyl, 2-Indolyl, 3-Indolyl, 2,3-Dihydroindolyl,
C₈-C₂₀-Arylalkenyl, besonders bevorzugt o-Vinylphenyl, m-Vinylphenyl, p-Vinylphenol,
C₈-C₂₀-Arylalkinyl, besonders bevorzugt o-Ethinylphenyl, m-Ethinylphenyl oder p-Ethinylphenyl,
C₂ - C₂₀ - heteroatomhaltige Gruppe, besonders bevorzugt Carbonyl, Benzoyl, Oxybenzoyl, Benzoyloxy, Acetyl, Acetoxy oder Nitril verstanden, wobei eine oder mehrere C₁-C₂₀-kohlenstoffhaltige Gruppen ein cyclisches System bilden können.

Im Rahmen der vorliegenden Erfindung werden unter einer C₂-C₂₀-kohlenstoffhaltigen Gruppe bevorzugt die Reste
C₂-C₂₀-Alkyl, besonders bevorzugt Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl, C₂ - C₂₀ - Alkenyl, besonders bevorzugt Ethenyl, Propenyl, Butenyl, Pentenyl, Cyclopentenyl, Hexenyl, Cyclohexenyl, Octenyl oder Cyclooctenyl,
C₂ - C₂₀ - Alkinyl, besonders bevorzugt Ethinyl, Propionyl, Butinyl, Pentinyl, Hexinyl oder Octinyl,
C₆-C₂₀-Aryl, besonders bevorzugt Benzyliden, o-Methoxybenzyliden, 2,6-Dimethylbenzyliden, Phenyl, Biphenyl, Naphthyl, Anthracenyl, Triphenylenyl, [1,1';3',1"]Terphenyl-2'-yl, Binaphthyl oder Phenanthrenyl,
C₂ - C₂₀ - Fluoralkyl, besonders bevorzugt 3-Trifluorpropyl, 2,2'-Trifluorisopropyl, C₆-C₂₀-Fluoraryl, besonders bevorzugt Pentafluorophenyl, 3,5-Bistrifluoromethylphenyl, Pentafluorobenzyliden, 3,5-Bistrifluoromethylbenzyliden, Tetrafluorophenyl oder Heptafluoronaphthyl,
C₂-C₂₀-Alkoxy, besonders bevorzugt n-Propoxy, i-Propoxy, n-Butoxy, i-Butoxy, s-Butoxy oder t-Butoxy,
C₆-C₂₀-Aryloxy, besonders bevorzugt Phenoxy, Naphthoxy, Biphenyloxy, Anthracenyloxy, Phenanthrenyloxy,
C₇-C₂₀-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl,
C₇-C₂₀-Alkylaryl, besonders bevorzugt Benzyl, Ethylphenyl, Propylphenyl, Diphenylmethyl, Triphenylmethyl oder Naphthalinylmethyl,
C₇-C₂₀-Aryloxyalkyl, besonders bevorzugt o-Methoxyphenyl, m-Phenoxymethyl, p-Phenoxymethyl,
C₁₂-C₂₀-Aryloxyaryl, besonders bevorzugt p-Phenoxyphenyl,
C₅-C₂₀-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl,
C₄-C₂₀-Heterocycloalkyl, besonders bevorzugt Furyl, Benzofuryl, 2-Pyrolidinyl, 2-Indolyl, 3-Indolyl, 2,3-Dihydroindolyl,
C₈-C₂₀-Arylalkenyl, besonders bevorzugt o-Vinylphenyl, m-Vinylphenyl, p-Vinylphenyl,
C₈-C₂₀-Arylalkinyl, besonders bevorzugt o-Ethinylphenyl, m-Ethinylphenyl oder p-Ethinylphenyl,
C₂ - C₂₀ - heteroatomhaltige Gruppe, besonders bevorzugt Benzoyl, Oxybenzoyl, Benzoyloxy verstanden, wobei eine oder mehrere C₂-C₂₀-kohlenstoffhaltige Gruppen ein cyclisches System bilden können.

In einer, bevorzugten Ausführungsform gilt für die Formel I, dass:
- M¹: bevorzugt Ti, Zr, oder Hf ist, und

In einer bevorzugten Ausführungsform gilt für die Formel I bevorzugt, dass:
- M¹: Zirkonium ist, und
- R¹, R²: gleich sind und für Chlor, Methyl oder Phenolat stehen, und
- R³: eine Isopropyl-, Isobutyl-, Cyclopentyl-, Cyclohexyl-, tert.-Butyl-, oder eine Phenyl-Gruppe ist, und
- R¹⁰: eine C₁-C₆ - kohlenstoffhaltige Gruppe ist, und eine Alkylgruppe ist, und
- R⁴, R⁶, R⁷, R⁸, R¹⁰, R¹¹, R¹³, R¹⁴, R¹⁵: jeweils gleich Wasserstoff sind, und
- R⁵, R¹²: gleich sind und eine Phenylgruppe, welche in para-Position eine C₁-C₄-Alkylgruppe trägt ist, und
- R⁹: eine Brücke zwischen den Liganden bildet, welche durch folgende Formeln gebildet werden kann 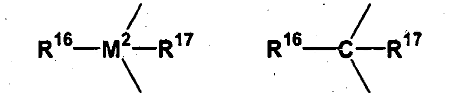 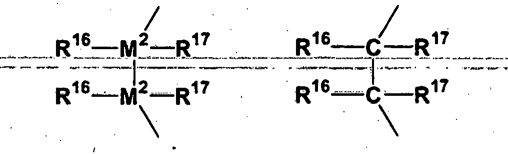
worin:
- M²: Silizium ist, und
- R¹⁶, R¹⁷: jeweils gleich oder verschieden und gleich Wasserstoff oder eine C₁ - C₂₀ - kohlenstoffhaltige Gruppe oder ein Halogenatom sind.

Erläuternde, die Erfindung jedoch nicht einschränkende Beispiele für Verbindungen der Formel I sind:
Dimethylsilandiyl-(2-isopropyl-4-(p-isopropyl-phenyl)indenyl)(2-methyl-4-(p-isopropylphenyl)indenyl)-zirkoniumdichlorid,
Dimethylsilandiyl-(2-isopropyl-4-(p-tert.-butyl-phenyl)indenyl)(2-methyl-4-(p-tert.-butyl-phenyl)indenyl)-zirkoniumdichlorid,
Dimethylsilandiyl-(2-isopropyl-4-(p-tert-butyl-phenyl)indenyl)(2,7-dimethyl-4-(p-tert.-butyl-phenyl) indenyl)-zirkoniumdichlorid,
Dimethylsilandiyl-(2-isopropyl-4-(p-tert.-butyl-phenyl)indenyl)(2,5,6,7-tetramethyl-4-(p-tert.-butyl-phenyl)indenyl)-zirkoniumdichlorid,
Dimethylsilandiyl-(2-isopropyl-6-methyl-4-(p-tert.-butyl-phenyl)indenyl)(2,6-dimethyl-4-(p-tert.-butyl-phenyl)indenyl)-zirkoniumdichlorid,
Dimethylsilandiyl-(2-isopropyl-4-(p-sec.-butyl-phenyl)indenyl)(2-methyl-4-(p-sec. butyl-phenyl)indenyl)-zirkoniumdichlorid,
Dimethylsilandiyl-(2-isopropyl-4-(p-cyclohexyl-phenyl)indenyl)(2-methyl-4-(p-cyclohexyl-phenyl)indenyl)-zirkoniumdichlorid,
Dimethylsilandiyl-(2-isopropyl-4-(p-trimethylsilyl-phenyl)indenyl)(2-methyl-4-(p-trimethylsilyl-phenyl)indenyl)-zirkoniumdichlorid,
Dimethylsilandiyl-(2-isopropyl-4-(p-adamantyl-phenyl)indenyl)(2-methyl-4-(p-adamantyl-phenyl)indenyl)-zirkoniumdichlorid,
Dimethylsilandiyl-(2-isopropyl-4-(p-tris(trifluoromethyl)methyl-phenyl)indenyl)(2-methyl-4-(p-tris(trifluoromethyl)methyl-phenyl)indenyl)-zirkoniumdichlorid,
Dimethylsilandiyl-(2-isopropyl-4-phenyl-indenyl)(2-methyl-4-(p-tert.-butyl-phenyl)indenyl)-zirkoniumdichlorid,
Dimethylsilandiyl-(2-isopropyl-4-(p-tert.-butyl-phenyl)indenyl)(2-methyl-4-phenyl-indenyl)-zirkoniumdichlorid,
Dimethylsilandiyl-(2-isopropyl-4-(p-tert.-butyl-phenyl)indenyl)(2,7-dimethyl-4-phenyl-indenyl)-zirkoniumdichlorid,
Dimethylsilandiyl-(2-isopropyl-4-(p-tert.-butyl-phenyl)indenyl)(2,5,6,7-tetramethyl-4-phenyl-indenyl)-zirkoniumdichlorid,
Dimethylsilandiyl-(2-isopropyl-6-methyl-4-(p-tert.-butyl-phenyl)indenyl)(2,6-dimethyl-4-phenyl-indenyl)-zirkoniumdichlorid,
Dimethylsilandiyl-(2-isopropyl-4-phenyl-indenyl)(2,7-dimethyl-4-(p-tert.-butyl-phenyl)indenyl)-zirkoniumdichlorid,
Dimethylsilandiyl-(2-isopropyl-4-phenyl-indenyl)(2,5,6,7-tetramethyl-4-(p-tert.-butyl-phenyl) indenyl)-zirkoniumdichlorid,
Dimethylsilandiyl-(2-isopropyl-6-methyl-4-phenyl-indenyl)(2,6-dimethyl-4-(p-tert.-butyl-phenyl)indenyl)-zirkoniumdichlorid,
Dimethylsilandiyl-(2-isopropyl-4-(p-tert.-butyl-phenyl)indenyl)(2-methyl-4-(4-naphthyl)-indenyl) indenyl)-zirkoniumdichlorid,
Dimethylsilandiyl-(2-isopropyl-4-(4-naphthyl)-indenyl)indenyl)(2-methyl-4-(p-tert.-butyl-phenyl) indenyl)-zirkoniumdichlorid,
Dimethylsilandiyl-bis(2-isopropyl-[4,5]-benzo-indenyl)zirkoniumdichlorid Dimethylsilandiyl-bis(2-isopropyl-indenyl)zirkoniumdichlorid,
Dimethylsilandiyl-bis(2-isopropyl-4-(1-naphthyl)-indenyl)zirkoniumdichlorid,
Dimethylsilandiyl-bis(2-isopropyl-4-(2-naphthyl)-indenyl)zirkoniumdichlorid,
Dimethylsilandiyl-bis(2-isopropyl-4-phenyl-indenyl)zirkoniumdichlorid,
Dimethylsilandiyl-bis(2-isopropyl-4-tert.-butyl-indenyl)zirkoniumdichlorid,
Dimethylsilandiyl-bis(2-isopropyl-4-isopropyl-indenyl)zirkoniumdichlorid,
Dimethylsilandiyl-bis(2-isopropyl-4-ethyl-indenyl)zirkoniumdichlorid,
Dimethylsilandiyl-bis(2-isopropyl-4-acenaphth-indenyl)zirkoniumdichlorid,
Dimethylsilandiyl-bis(2,4-diisopropyl-indenyl)zirkoniumdichlorid,
Dimethylsilandiyl-bis(2-isopropyl-4-methyl-indenyl)zirkoniumdichlorid
Dimethylsilandiyl-bis(2,4,6-triisopropyl-indenyl)zirkoniumdichlorid,
Dimethylsilandiyl-bis(2,4,5-triisopropyl-indenyl)zirkoniumdichlorid,
Dimethylsilandiyl-bis(2-isopropyl-5-isobutyl-indenyl)zirkoniumdichlorid,
Dimethylsilandiyl-bis(2-isopropyl-5-t-butyl-indenyl)zirkoniumdichlorid,
Dimethylsilandiyl-bis(2-isopropyl-4-(4'-tert-butyl-phenyl)-indenyl)zirkoniumdichlorid,
Dimethylsilandiyl-bis(2-isopropyl-4-(4'-methyl-phenyl)-indenyl)zirkoniumdichlorid,
Dimethylsilandiyl-bis(2-isopropyl-4-(4'-ethyl-phenyl)-indenyl)zirkoniumdichlorid,
Dimethylsilandiyl-bis(2-isopropyl-4-(4'-trifluoromethyl-phenyl)-indenyl)zirkoniumdichlorid,
Dimethylsilandiyl-bis(2-isopropyl-4-(4'-methoxy-phenyl)-indenyl)zirkoniumdichlorid,
Dimethylsilandiyl-bis(2-isopropyl-4-(4'-tert-butyl-phenyl)-indenyl)zirkoniumdimethyl,
Dimethylsilandiyl-bis(2-isopropyl-4-(4'-methyl-phenyl)-indenyl)zirkoniumdimethyl,
Dimethylsilandiyl-bis(2-isopropyl-4-(4'-ethyl-phenyl)-indenyl)zirkoniumdimethyl,
Dimethylsilandiyl-bis(2-isopropyl-4-(4'-trifluoromethyl-phenyl)-indenyl)zirkoniumdimethyl,
Dimethylsilandiyl-bis(2-isopropyl-4-(4'-methoxy-phenyl)-indenyl)zirkoniumdimethyl,
Dimethylsilandiyl-bis(2-isopropyl-4-(4'-tert.-butyl-phenyl)-indenyl)hafniumdichlorid,
Dimethylsilandiyl-bis(2-isopropyl-4-(4'-tert.-butyl-phenyl)-indenyl)titaniumdichlorid,
Dimethylsilandiyl-bis(2-isopropyl-4-(4'-n-propyl-phenyl)-indenyl)zirkoniumdichlorid,
Dimethylsilandiyl-bis(2-isopropyl-4-(4'-n-butyl-phenyl)-indenyl)zirkoniumdichlorid,
Dimethylsilandiyl-bis(2-isopropyl-4-(4'-hexyl-phenyl)-indenyl)zirkoniumdichlorid,
Dimethylsilandiyl-bis(2-isopropyl-4-(4'-sec-butyl-phenyl)-indenyl)zirkoniumdichlorid,
Dimethylsilandiyl-bis(2-isopropyl4-(4'-methyl-phenyl)-indenyl)zirkoniumdichlorid,
Dimethylsilandiyl-bis(2-isopropyl-4-(4'-ethyl-phenyl)-indenyl)zirkoniumdichlorid,
Dimethylsilandiyl-bis(2-isopropyl-4-(4'-n-propyl-phenyl)-indenyl)zirkoniumdichlorid,
Dimethylsilandiyl-bis(2-isopropyl-4-(4'-n-butyl-phenyl)-indenyl)zirkoniumdichlorid,
Dimethylsilandiyl-bis(2-isopropyl-4-(4'-hexyl-phenyl)-indenyl)zirkoniumdichlorid,
Dimethylsilandiyl-bis(2-isopropyl-4-(4'-pentyl-phenyl)-indenyl)zirkoniumdichlorid,
Dimethylsilandiyl-bis(2-isopropyl-4-(4'-cyclohexyl-phenyl)-indenyl)zirkoniumdichlorid,
Dimethylsilandiyl-bis(2-isopropyl-4-(4'-sec-butyl-phenyl)-indenyl)zirkoniumdichlorid,
Dimethylsilandiyl-bis(2-isopropyl-4-(4'-tert.-butyl-phenyl)-indenyl)zirkoniumdichlorid,
Dimethylsilandiyl-bis(2-n-propyl-4-phenyl-indenyl)zirkoniumdichlorid,
Dimethylsilandiyl-bis(2-n-propyl-4-(4'-methy-phenyl)-indenyl)zirkoniumdichlorid,
Dimethylsilandiyl-bis(2-n-propyl-4-(4'-ethyl-phenyl)-indenyl)zirkoniumdichlorid,
Dimethylsilandiyl-bis(2-n-propyl-4-(4'-iso-propyl-phenyl)-indenyl)zirkoniumdichlorid,
Dimethylsilandiyl-bis(2-n-propyl-4-(4'-n-butyl-phenyl)-indenyl)zirkoniumdichlorid,
Dimethylsilandiyl-bis(2-n-propyl-4-(4'-hexyl-phenyl)-indenyl)zirkoniumdichlorid,
Dimethylsilandiyl-bis(2-n-propyl-4-(4'-cyclohexyl-phenyl)-indenyl)zirkoniumdichlorid,
Dimethylsilandiyl-bis(2-n-propyl-4-(4'-sec-butyl-phenyl)-indenyl)zirkoniumdichlorid,
Dimethylsilandiyl-bis(2-n-propyl-4-(4'-tert.-butyl-phenyl)-indenyl)zirkoniumdichlorid,
Dimethylsilandiyl-bis(2-n-butyl-4-phenyl-indenyl)zirkoniumdichlorid,
Dimethylsilandiyl-bis(2-n-butyl-4-(4'-methyl-phenyl)-indenyl)zirkoniumdichlorid,
Dimethylsilandiyl-bis(2-n-butyl-4-(4'-ethyl-phenyl)-indenyl)zirkoniumdichlorid,
Dimethylsilandiyl-bis(2-n-butyl-4-(4'-n-propyl-phenyl)-indenyl)zirkoniumdichlorid,
Dimethylsilandiyl-bis(2-n-butyl-4-(4'-iso-propyl-phenyl)-indenyl)zirkoniumdichlorid,
Dimethylsilandiyl-bis(2-n-butyl-4-(4'-n-butyl-phenyl)-indenyl)zirkoniumdichlorid,
Dimethylsilandiyl-bis(2-n-butyl-4-(4'-hexyl-phenyl)-indenyl)zirkoniumdichlorid,
Dimethylsilandiyl-bis(2-n-butyl-4-(4'-cyclohexyl-phenyl)-indenyl)zirkoniumdichlorid,
Dimethylsilandiyl-bis(2-n-butyl-4-(4'-sec-butyl-phenyl)-indenyl)zirkoniumdichlorid,
Dimethylsilandiyl-bis(2-n-butyl-4-(4'-tert.-butyl-phenyl)-indenyl)zirkoniumdichlorid,
Dimethylsilandiyl-bis(2-hexyl-4-phenyl-indenyl)zirkoniumdichlorid,
Dimethylsilandiyl-bis(2-hexyl-4-(4'-methyl-phenyl)-indenyl)zirkoniumdichlorid,
Dimethylsilandiyl-bis(2-hexyl-4-(4'-ethyl-phenyl)-indenyl)zirkoniumdichlorid,
Dimethylsilandiyl-bis(2-hexyl-4-(4'-n-propyl-phenyl)-indenyl)zirkoniumdichlorid,
Dimethylsilandiyl-bis(2-hexyl-4-(4'-iso-propyl-phenyl)-indenyl)zirkoniumdichlorid,
Dimethylsilandiyl-bis(2-hexyl-4-(4'-n-butyl-phenyl)-indenyl)zirkoniumdichlorid,
Dimethylsilandiyl-bis(2-hexyl-4-(4'-n-hexyl-phenyl)-indenyl)zirkoniumdichlorid,
Dimethylsilandiyl-bis(2-hexyl-4-(4'-cyclohexyl-phenyl)-indenyl)zirkoniumdichlorid,
Dimethylsilandiyl-bis(2-hexyl-4-(4'-sec-butyl-phenyl)-indenyl)zirkoniumdichlorid,
Dimethylsilandiyl-bis(2-hexyl-4-(4'-tert.-butyl-phenyl)-indenyl)zirkoniumdichlorid,
Dimethylsilandiyl-bis(2-phenyl-4-phenyl-indenyl)zirkoniumdichlorid,
Dimethylsilandiyl-bis(2-phenyl-4-(4'-methyl-phenyl)-indenyl)zirkoniumdichlorid,
Dimethylsilandiyl-bis(2-phenyl-4-(4'-ethyl-phenyl)-indenyl)zirkoniumdichlorid,
Dimethylsilandiyl-bis(2-phenyl-4-(4'-n-propyl-phenyl)-indenyl)zirkoniumdichlorid,
Dimethylsilandiyl-bis(2-phenyl-4-(4'-iso-propyl-phenyl)-indenyl)zirkoniumdichlorid,
Dimethylsilandiyl-bis(2-phenyl-4-(4'-n-butyl-phenyl)-indenyl)zirkoniumdichlorid,
Dimethylsilandiyl-bis(2-phenyl-4-(4'-n-hexyl-phenyl)-indenyl)zirkoniumdichlorid,
Dimethylsilandiyl-bis(2-phenyl-4-(4'-cyclohexyl-phenyl)-indenyl)zirkoniumdichlorid,
Dimethylsilandiyl-bis(2-phenyl-4-(4'-sec-butyl-phenyl)-indenyl)zirkoniumdichlorid,
Dimethylsilandiyl-bis(2-phenyl-4-(4'-tert.-butyl-phenyl)-indenyl)zirkoniumdichlorid,
Dimethylsilandiyl-bis(2-isopropyl-4-(4'-tert.-butyl-phenyl)-indenyl)zirkoniumbis(dimethylamine),
Dimethylsilandiyl-bis(2-isopropyl-4-(4'-tert.-butyl-phenyl)-indenyl)zirkoniumdibenzyl,
Dimethylsilandiyl-bis(2-ethyl-4-(4'-tert.-butyl-phenyl)-indenyl)zirkoniumdichlorid,
Dimethylsilandiyl-bis(2-isopropyl-4-(4'-tert.-butyl-phenyl)-indenyl)zirkoniumdimethyl,
Dimethylsilandiyl-(2-methyl-4-azapentalen)(2-isopropyl-4-(4'-methyl-phenyl)-indenyl)zirkoniumdichlorid,
Dimethylsilandiyl-(2-methyl-5-azapentalen)(2-isopropyl-4-(4'-methyl-phenyl)-indenyl)zirkoniumdichlorid,
Dimethylsilandiyl-(2-methyl-6-azapentalen)(2-isopropyl-4-(4'-methyl-phenyl)-indenyl)zirkoniumdichlorid,
Dimethylsilandiyl-(2-methyl-4-azapentalen)(2-isopropyl-4-(4'-ethyl-phenyl)-indenyl)zirkoniumdichlorid,
Dimethylsilandiyl-(2-methyl-4-thiapentalen)(2-isopropyl-4-(4'-n-propyl-phenyl)-indenyl)zirkoniumdichlorid,
Dimethylsilandiyl-(2-methyl-4-azapentalen)(2-isopropyl-4-(4'-isopropyl-phenyl)-indenyl)zirkoniumdichlorid,
Dimethylsilandiyl-(2-methyl-6-azapentalen)(2-isopropyl-4-(4'-isopropyl-phenyl)-indenyl)zirkoniumdichlorid,
Dimethylsilandiyl-(2,5-dimethyl-6-thiapentalen)(2-isopropyl-4-(4'-isopropyl-phenyl)-indenyl)-zirkoniumdichlorid,
Dimethylsilandiyl-(2-methyl-6-oxapentalen)(2-isopropyl-4-(4'-isopropyl-phenyl)-indenyl)zirkoniumdichlorid,
Dimethylsilandiyl-(2-methyl-6-azapentalen)(2-isopropyl-4-(4'-n-butyl-phenyl)-indenyl)- zirkoniumdichlorid,
Dimethylsilandiyl-(2-methyl-5-thiapentalen)(2-isopropyl-4-(4'-n-butyl-phenyl)-indenyl) zirkoniumdichlorid,
Dimethylsilandiyl-(2-methyl-4-oxapentalen)(2-isopropyl-4-(4'-n-butyl-phenyl)-indenyl) zirkoniumdichlorid,
Dimethylsilandiyl-(2-methyl-4-thiapentalen)(2-isopropyl-4-(4'-s-butyl-phenyl)-indenyl) zirkoniumdichlorid,
Dimethylsilandiyl-(2-methyl-4-oxapentalen)(2-isopropyl-4-(4'-s-butyl-phenyl)-indenyl) zirkoniumdichlorid,
Dimethylsilandiyl-(2-methyl-4-azapentalen)(2-isopropyl-4-(4'-tert.-butyl-phenyl)-indenyl)-zirkoniumdichlorid,
Dimethylsilandiyl-(2-methyl-6-azapentalen)(2-isopropyl-4-(4'-tert.-butyl-phenyl)-indenyl)-zirkoniumdichlorid,
Dimethylsilandiyl-(2-methyl-4-azapentalen)(2-isopropyl-4-(4'-n-pentyl-phenyl)-indenyl)-zirkoniumdichlorid,
Dimethylsilandiyl-(2-methyl-N-phenyl-6-azapentalen)(2-isopropyl-4-(4'-n-pentylphenyl)-indenyl)-zirkoniumdichlorid,
Dimethylsilandiyl-(2-methyl-4-oxapentalen)(2-isopropyl-4-(4'-n-pentyl-phenyl)-indenyl)zirkoniumdichlorid,
Dimethylsilandiyl-(2-methyl-4-azapentalen)(2-isopropyl-4-(4'-n-hexyl-phenyl)-indenyl)zirkoniumdichlorid,
Dimethylsilandiyl-(2-methyl-4-thiapentalen)(2-isopropyl-4-(4'-n-hexyl-phenyl)-indenyl)zirkoniumdichlorid;
Dimethylsilandiyl-(2-methyl-6-thiapentalen)(2-isopropyl-4-(4'-n-hexyl-phenyl)-indenyl)zirkoniumdichlorid,
Dimethylsilandiyl-(2,5-dimethyl-4-thiapentalen)(2-isopropyl-4-(4'-n-hexyl-phenyl)-indenyl)-zirkoniumdichlorid,
Dimethylsilandiyl-(2,5-dimethyl-6-thiapentalen)(2-isopropyl-4-(4'-n-hexyl-phenyl)-indenyl)-zirkoniumdichlorid,
Dimethylsilandiyl-(2,5-dimethyl-6-thiapentalen)(2-isopropyl-4-(4'-cyclohexyl-phenyl)-indenyl)-zirkoniumdichlorid,
Dimethylsilandiyl-(2-methyl-4-azapentalen)(2-isopropyl-4-(4'-trimethylsilyl-phenyl)-indenyl)-zirkoniumdichlorid,
Dimethylsilandiyl-(2-methyl-4-thiapentalen)(2-isopropyl-4-(4'-trimethylsilyl-phenyl)-indenyl)-zirkoniumdichlorid,
Dimethylsilandiyl-(2-methyl-5-thiapentalen)(2-isopropyl-4-(4'-trimethylsilyl-phenyl)-indenyl)-zirkoniumdichlorid,
Dimethylsilandiyl-(2-methyl-6-thiapentalen)(2-isopropyl-4-(4'-trimethylsilyl-phenyl)-indenyl)-zirkoniumdichlorid,
Dimethylsilandiyl-(2,5-dimethyl-4-azapentalen)(2-isopropyl-4-(4'-adamantyl-phenyl)-indenyl)-zirkoniumdichlorid,
Dimethylsilandiyl-(2-methyl-4-thiapentalen)(2-isopropyl-4-(4'-adamantyl-phenyl)-indenyl)-zirkoniumdichlorid,
Dimethylsilandiyl-(2-methyl-6-thiapentalen)(2-isopropyl-4-(4'-adamantyl-phenyl)-indenyl)-zirkoniumdichlorid,
Dimethylsilandiyl-(2,5-dimethyl-4-thiapentalen)(2-isopropyl-4-(4'-adamantyl-phenyl)-indenyl)-zirkoniumdichlorid,
Dimethylsilandiyl-(2-methyl-4-azapentalen)(2-isopropyl-4-(4'-tris(trifluoromethyl)-methyl-phenyl)-indenyl)-zirkoniumdichlorid,
Dimethylsilandiyl-(2,5-dimethyl-4-azapentalen)(2-isopropyl-4-(4'-tris(trifluoromethyl)methyl-phenyl)-indenyl)-zirkoniumdichlorid,
Dimethylsilandiyl-(2-methyl-4-thiapentalen)(2-isopropyl-4-(4'-tris(trifluoromethyl)methyl-phenyl)-indenyl)-zirkoniumdichlorid,
Dimethylsilandiyl-(2-methyl-6-thiapentalen)(2-isopropyl-4-(4'-tris(trifluoromethyl)-methyl-phenyl)-indenyl)-zirkoniumdichlorid,
Dimethylsilandiyl-(2-methyl-N-phenyl-6-azapentalen)(2-isopropyl-4-(4'-tert-butyl-phenyl)-indenyl)-zirkoniumdichlorid,
Dimethylsilandiyl-(2-methyl-4-azapentalen)(2-isopropylindenyl)zirkoniumdichlorid,
Dimethylsilandiyl-(2-methyl-N-phenyl-4-azapentalen)(2-isopropylindenyl)-zirkoniumdichlorid,
Dimethylsilandiyl-(2-methyl-4-thiapentalen)(2-isopropylindenyl)zirkoniumdichlorid,
Dimethylsilandiyl-(2-methyl-5-thiapentalen)(2-isopropylindenyl)zirkoniumdichlorid,
Dimethylsilandiyl-(2-methyl-6-thiapentalen)(2-isopropylindenyl)zirkoniumdichlorid,
Dimethylsilandiyl-(2-methyl-4-azapentalen)(2-isopropyl-4-phenyl-indenyl)-zirkoniumdichlorid,
Dimethylsilandiyl-(2-methyl-5-azapentalen)(2-isopropyl-4-phenyl-indenyl)-zirkoniumdichlorid,
Dimethylsilandiyl-(2-methyl-6-azapentalen)(2-isopropyl-4-phenyl-indenyl)-zirkoniumdichlorid,
Dimethylsilandiyl-(2-methyl-N-phenyl-4-azapentalen)(2-isopropyl-4-phenyl-indenyl)-zirkoniumdichlorid,
Dimethylsilandiyl-(2-methyl-N-phenyl-5-azapentalen)(2-isopropyl-4-phenyl-indenyl)-zirkoniumdichlorid,
Dimethylsilandiyl-(2-methyl-4-thiapentalen)(2-isopropyl-4-phenyl-indenyl)-zirkoniumdichlorid,
Dimethylsilandiyl-(2-methyl-5-thiapentalen)(2-isopropyl-4-phenyl-indenyl)-zirkoniumdichlorid,
Dimethylsilandiyl-(2-methyl-6-thiapentalen)(2-isopropyl-4-phenyl-indenyl)-zirkoniumdichlorid,
Dimethylsilandiyl-(2-methyl-4-oxapentalen)(2-isopropyl-4-phenyl-indenyl)-zirkoniumdichlorid,
Dimethylsilandiyl-(2-methyl-4-azapentalen)(2-isopropyl-4,5-benzo-indenyl)-zirkoniumdichlorid,
Dimethylsilandiyl-(2-methyl-N-phenyl-4-azapentalen)(2-isopropyl-4,5-benzo-indenyl)-zirkoniumdichlorid,
Dimethylsilandiyl-(2-methyl-N-phenyl-5-azapentalen)(2-isopropyl-4,5-benzo-indenyl)-zirkoniumdichlorid,
Dimethylsilandiyl-(2-methyl-N-phenyl-6-azapentalen)(2-isopropyl-4,5-benzo-indenyl)-zirkoniumdichlorid,
Dimethylsilandiyl-(2-methyl-4-thiapentalen)(2-isopropyl-4,5-benzo-indenyl)-zirkoniumdichlorid,
Dimethylsilandiyl-(2-methyl-5-thiapentalen)(2-isopropyl-4,5-benzo-indenyl)-zirkoniumdichlorid,
Dimethylsilandiyl-(2-methyl-6-thiapentalen)(2-isopropyl-4,5-benzo-indenyl)-zirkoniumdichlorid,
Dimethylsilandiyl-(2-methyl-4-oxapentalen)(2-isopropyl-4,5-benzo-indenyl)-zirkoniumdichlorid,
Dimethylsilandiyl-(2-methyl-5-oxapentalen)(2-isopropyl-4,5-benzo-indenyl)-zirkoniumdichlorid,
Dimethylsilandiyl-(2-methyl-6-oxapentalen)(2-isopropyl-4,5-benzo-indenyl)-zirkoniumdichlorid,
Dimethylsilandiyl-bis(2-isopropyl-4-azapentalen)zirkoniumdichlorid,
Dimethylsilandiyl-bis(2-isopropyl-N-phenyl-4-azapentalen)zirkoniumdichlorid,
Dimethylsilandiyl-bis(2-isopropyl-4-thiapentalen)zirkoniumdichlorid,
   sowie die entsprechenden Titan- und Hafniumverbindungen und auch von Dimetylsilandiyl verschiedene Brücken nach Formel I wie Dimethylmethandiyl,
Diphenylmethandiyl, Ethandiyl, 1,2-Dimethylethandiyl, Dipropylsilandiyl,
Dibutylsilandiyl, Dipentylsilandiyl, Dihexylsilandiyl, Diheptylsilandiyl, Dioctylsilandiyl,
Dinonylsilandiyl, Didecylsilanediyl, Diundecylsilandiyl, Didodecylsilandiyl.

Die Synthese der erfindungsgemäßen Verbindungen der Formel I kann nach dem Fachmann bekannten Verfahren durchgeführt werden. Ein Beispiel hierfür ist im folgenden aufgeführt.

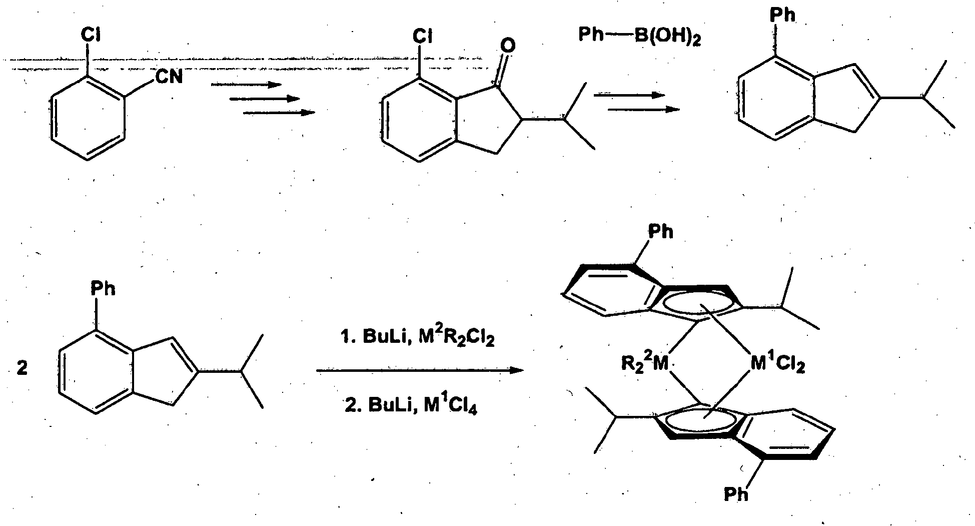

Die erfindungsgemäßen Verbindungen der Formel I eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens eine erfindungsgemäße Verbindung der Formel I enthält.

Vorzugsweise wird als Olefin Ethylen eingesetzt. In einer bevorzugten Ausführungsform wird Ethylen unter Verwendung der erfindungsgemäßen Katalysatoren polymerisiert, wobei unter Polymerisation sowohl die Homopolymerisation von Ethylenen als auch die Copolymerisation von Ethylen mit anderen Olefinen verstanden wird. Das im Verfahren eingesetzte Ethylen kann gegebenenfalls noch weitere Olefine enthalten, die ausgewählt sind aus der Gruppe, die gebildet wird durch
1-Olefine mit 2 - 20, vorzugsweise 2 bis 10 C-Atomen, wie Propen, 1-Buten, 1-Penten, 1-Hexen, 1-Decen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Cyclopentadien, Tetracyclododecen oder Methylnorbornen sowie Gemische derselben.

Besonders bevorzugt wird das eingesetzte Ethylen mit einem oder mehreren 1-Olefinen mit 2 bis 8 C-Atomen, wie Propen, 1-Buten, 1-Penten, 1-Hexen, Styrol oder Butadien copolymerisiert.

Bevorzugt wird ein Co-Monomerenanteil von 0,1 bis 10%, vorzugsweise 0,5 bis 9% und insbesondere 2 bis 5% eingesetzt.

Insbesondere bevorzugt ist die Copolymerisation von Ethylen mit dem Co-Monomer Propen.

Weiterhin bevorzugt ist das erfindungsgemäße Verfahren bei dem das eingesetzte Ethylen homopolymerisiert wird oder mit Propen copolymerisiert wird.

Besonders bevorzugt ist dabei, dass beim erfindungsgemäßen Verfahren das eingesetzte Ethylen homopolymerisiert wird.

Die mit dem erfindungsgemäßen Verfahren hergestellten Polymere und Copolymere des Ethylens sind ultrahochmolekular, da sie ein viskosimetrisch ermitteltes Molekulargewicht von größer 1 x 10⁶ mol/g haben.

Bevorzugt sind ebenfalls durch das erfindungsgemäße Verfahren erhältliche Polyethylene mit einem Molekulargewicht von größer 1 x 10⁶ mol/g.

Die viskosimetrischen Messungen erfolgen in Decalin bei 135°C und einer Konzentration von 0.1 g (Polymer) / 1 I (Decalin). Aus der erhaltenen Viskositätszahl kann das Molekulargewicht abgeleitet werden.

Die Polymerisation wird bei einer Temperatur von -20 bis 300°C, bevorzugt 0 bis 200°C, ganz besonders bevorzugt bei 20 bis 100°C durchgeführt. Der Druck beträgt 0.5 bis 2000 bar, bevorzugt 1 bis 64 bar. Die Polymerisation kann in Lösung, in Masse, in Suspension oder in Emulsion, kontinuierlich oder diskontinuierlich, ein-oder mehrstufig durchgeführt werden.

Geeignete Lösungsmittel für die Polymerisation sind beispielsweise aliphatische Kohlenwasserstoffe wie Pentan, Hexan und dergleichen oder aromatische Kohlenwasserstoffe wie Benzol, Toluol, Xylole und dergleichen, oder Ether wie Diethylether, Dibutylether, Methyl-tert-butylether, Tetrahydrofuran, Dioxan, Anisol, Diphenylether und Ethylphenylether, auch halogenierte Lösungsmittel wie Dichlormethan, Trichlormethan, Chlorbenzol, Brombenzol und dergleichen. Es können auch Mischungen verschiedener Lösungsmittel in unterschiedlichen Mengenverhältnissen erfindungsgemäß eingesetzt werden.

Ultrahochmolekulare Polymere und Copolymere des Ethylens werden durch Polymerisation von mindestens einem Olefin in Gegenwart eines Katalysatorsystems aus mindestens einer Verbindung der Formel I und einem Cokatalysator erhalten.

In einer bevorzugten Ausführungsform enthält das im erfindungsgemäßen Verfahren eingesetzte Katalysatorsystem mindestens einen Cokatalysator.

Der Cokatalysator, der zusammen mit mindestens einer Übergangsmetallverbindung der Formel I das Katalysatorsystem bildet, enthält mindestens eine Verbindung vom Typ eines Aluminoxans oder einer weiteren Lewis-Säure oder einer ionischen Verbindung, die durch Reaktion mit der Übergangsmetallverbindung, diese in eine kationische Verbindung überführt.

Besonders bevorzugt werden Katalysatorensysteme eingesetzt, die mindestens eine Lewis-Säure als Cokatalysator enthalten.

Als Aluminoxan wird bevorzugt eine Verbindung der allgemeinen Formel **II**

(R AIO)q **Formel II**

verwendet.

Weitere geeignete Aluminoxane können z.B. cyclisch wie in Formel III 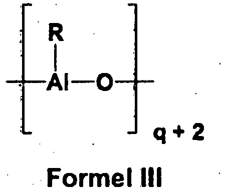 oder linear wie in Formel IV 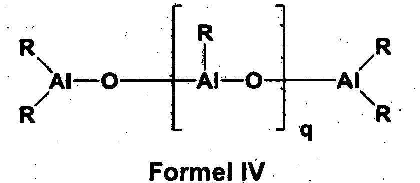 oder vom Cluster-Typ wie in Formel V 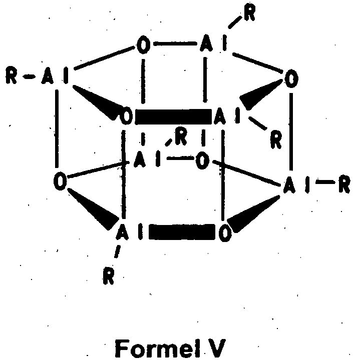 sein. Derartige Aluminoxane werden beilspielsweise in JACS 117 (1995), 6465-74, Organometallics 13 (1994), 2957-2969, beschrieben.

Die Reste R in den Formeln **II, III, IV** und **V** können gleich oder verschieden sein und eine C₁-C₂₀-Kohlenwasserstoffgruppe wie eine -C₁-C₆-Alkylgruppe, eine C₆-C₁₈-Arylgruppe, Benzyl oder Wasserstoff bedeuten, und q eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, dass eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆-, CF₃SO₃⁻ oder ClO₄⁻ . Als kationisches Gegenion werden protonierte Lewis-Basen wie z.B. Methylamin, Anilin, N, N-Dimethylbenzylamin sowie deren Derivate, N, N-Dimethylcyclohexylamin sowie deren Derivate, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin,-p-Nitro-N,N-dimethylanilin, Triethylphosphin, Triphenylphosphin, Diphenylphosphin, Tetrahydrothiophen oder Triphenylcarbenium eingesetzt.

Beispiele für solche ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
N,N-Dimethylcyclohexylammoniumtetrakis(pentafluorophenyl)borat
N,N-Dimethylbenzylammoniumtetrakis(pentafluorophenyl)borat
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

>

Bevorzugt sind Triphenylcarbeniumtetrakis(pentafluorophenyl)borat und/oder N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltate(III),
Tri(butyl)ammoniumbis(undecahydrid-7,8-dicarbaundecaborat)ferrat(III) von Bedeutung.

Als Cokatalysatorsysteme sind ebenfalls Kombinationen aus mindestens einem der oben genannten Amine und optional einem Träger mit elementorganischen Verbindungen wie sie im Patent WO 99/40129 beschrieben sind, von Bedeutung. Die in WO 99/40129 genannten Träger mit elementorganischen Verbindungen sind ebenfalls Bestandteil der vorliegenden Erfindung.

Bevorzugte Bestandteile dieser Cokatalysatorsysteme sind die Verbindungen der Formeln **A** und **B**, 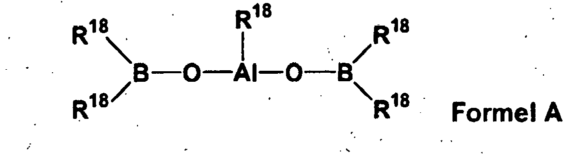 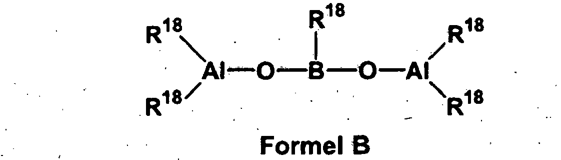 worin
- R¹⁸: ein Wasserstoffatom, ein Halogenatom, eine C₁-C₂₀-kohlenstoffhaltige Gruppe, insbesondere C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₂₀-Arylalkyl, C₇-C₄₀-Halogenarylalkyl, C₇-C₂₀-Alkylaryl oder C₇-C₂₀-Halogenalkylaryl. R¹⁸ kann auch eine -OSiR₃-Gruppe sein, worin R gleich oder verschieden sind und die gleiche Bedeutung wie R¹⁸ haben.

Als weiterer bevorzugter Cokatalysator sind darüber hinaus allgemein Verbindungen anzusehen, die durch die Umsetzung mindestens einer Verbindung der Formel **C** und/oder **D** und/oder **E** mit mindestens einer Verbindung der Formel **F** entstehen.

**R_{f}¹⁹B-(LR¹⁸)_{g}** Formel C

**R₂¹⁸B-X¹-BR₂¹⁸** Formel D

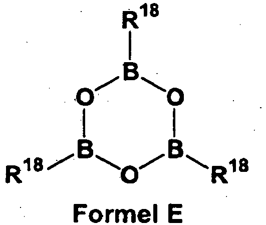

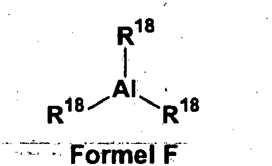

worin
- R¹⁸: die gleiche Bedeutung wie vorstehend genannte hat, und
- R¹⁹: ein Wasserstoffatom oder eine borfreie C₁-C₂₀-kohlenstoffhaltige Gruppe wie C₁-C₂₀-Alkyl, C₆-C₂₀-Aryl, C₇-C₂₀-Arylalky, C₇-C₂₀-Alkylaryl sein kann und
- X¹: ein Element der 16.Gruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist, und
- L: ist gleich ein Element der 16. Gruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- f: eine ganze Zahl von 0 bis 3 ist
- g: eine ganze Zahl von 0 bis 3 ist, wobei z + y ungleich 0 sind,
- h: eine ganze Zahl von 1 bis 10 ist.

Gegebenenfalls werden die elementorganischen Verbindungen mit einer Organometallverbindung der Formel **II** bis **V** und oder **VI**

[M³R²⁰ᵣ]ₖ Formel VI

kombiniert, worin M³ ein Element der 1., 2. und 13. Gruppe des Periodensystems der Elemente ist, R²⁰ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₂₀-Aryl-, C₇-C₂₀-Aryl-alkyl oder C₇-C₂₀-Alkyl-aryl-Gruppe bedeutet, r eine ganze Zahl von 1 bis 3 und k eine ganze Zahl von 1 bis 4 ist.

Beispiele für die cokatalytisch wirkenden Verbindungen der Formeln **A** und **B** sind

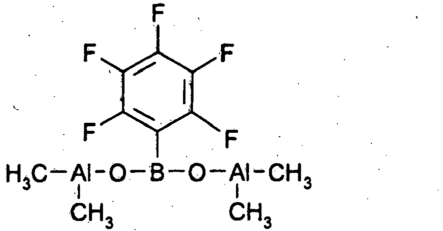

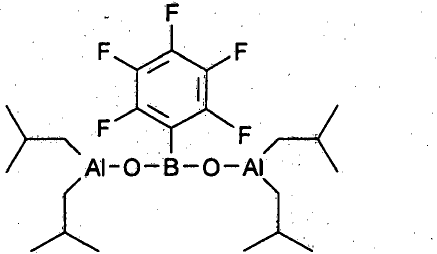

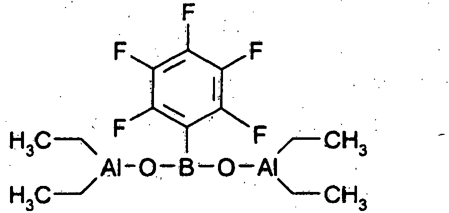

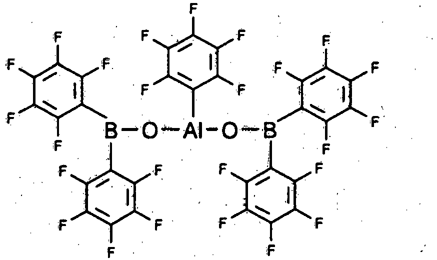

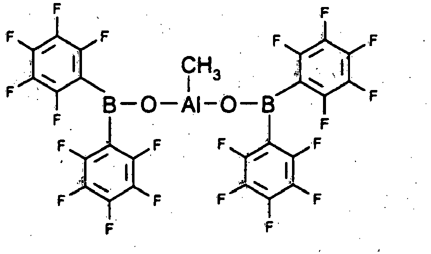

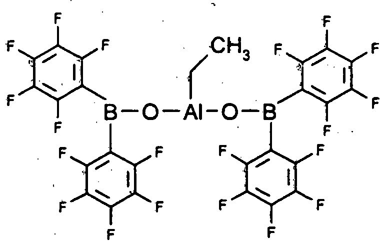

Bei den Organometallverbindungen der Formel **F** handelt es sich vorzugsweise um neutrale Lewissäuren worin M² für Lithium, Magnesium und/oder Aluminium, insbesondere Aluminium, steht. Beispiele für die bevorzugten Organometall-Verbindungen der Formel **F** sind Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Diisopropylaluminiumhydrid, Dimethylatuminium(trimethylsiloxid), Dimethyl-aluminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE-A-19622207, EP-A-601830, EP-A-824112, EP-A-824113, EP-A-811627, WO97/11775 und DE-A-19606167 genannten Verbindungen zu verwenden.

Des weiteren können die erfindungsgemäßen Katalysatoren homogen und auch heterogen geträgert eingesetzt werden.

In einer bevorzugten Ausführungsform wird beansprucht, dass die beim erfindungsgemäßen Verfahren eingesetzte Verbindung der Formel I in Form eines Katalysatorsystems in geträgerter Form eingesetzt wird.

Die Trägerkomponente des Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine). Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der Elemente Calcium, Aluminium, Silicium, Magnesium, Titan und entsprechende Oxid-Mischungen, sowie Hydrotalcite. Andere anorganische Oxide, die allein oder in Kombination mit den zuletzt genannten bevorzugten oxiden Trägern eingesetzt werden können, sind z.B. MgO, ZrO₂, TiO₂ oder B₂O₃, um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauem sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems wird mindestens eine der oben beschriebenen Verbindung der Formel I in einem geeigneten Lösemittel mit mindestens einer Cokatalysatorkomponente in Kontakt gebracht, wobei bevorzugt ein lösliches Reaktionsprodukt, ein Addukt oder ein Gemisch erhalten wird.

Die so erhaltene Zubereitung wird dann mit dem dehydratisierten oder inertisierten Trägermaterial vermischt, das Lösemittel entfernt und das resultierende geträgerte Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein weiterer Gegenstand der Erfindung ist die Verwendung des erfindungsgemäßen Katalysatorsystems, enthaltend mindestens eine Verbindung gemäß Formel und mindestens einen Cokatalysator zur Herstellung von ultrahochmolkularen Homo- oder Co-Polymeren auf Basis von Ethylen, wobei das Polymer ein Viskosimetrisch ermitteltes Molekulargewicht von größer 1x10⁶ g/mol aufweist.

Dabei ist insbesondere bevorzugt, dass das Katalysatorsystem in geträgerter Form vorliegt.

Die Erfindung wird durch folgende, die Erfindung jedoch nicht einschränkende Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Folgende Katalysatoren werden in den Beispielen eingesetzt:

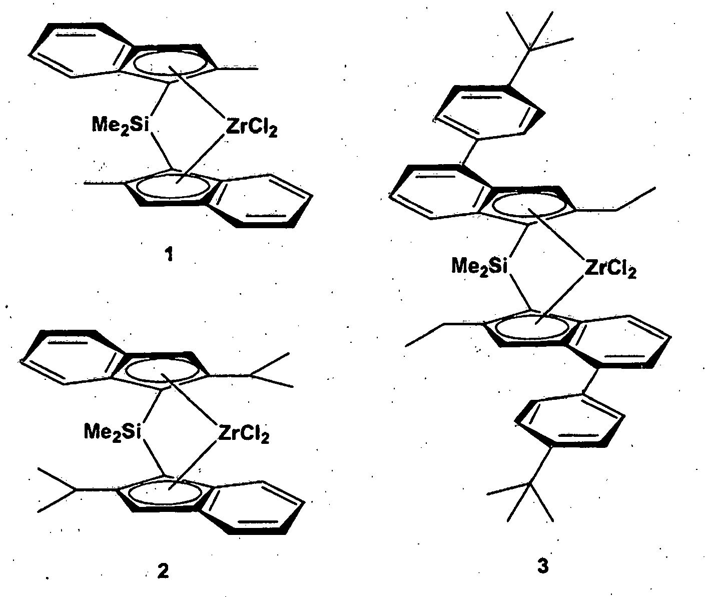

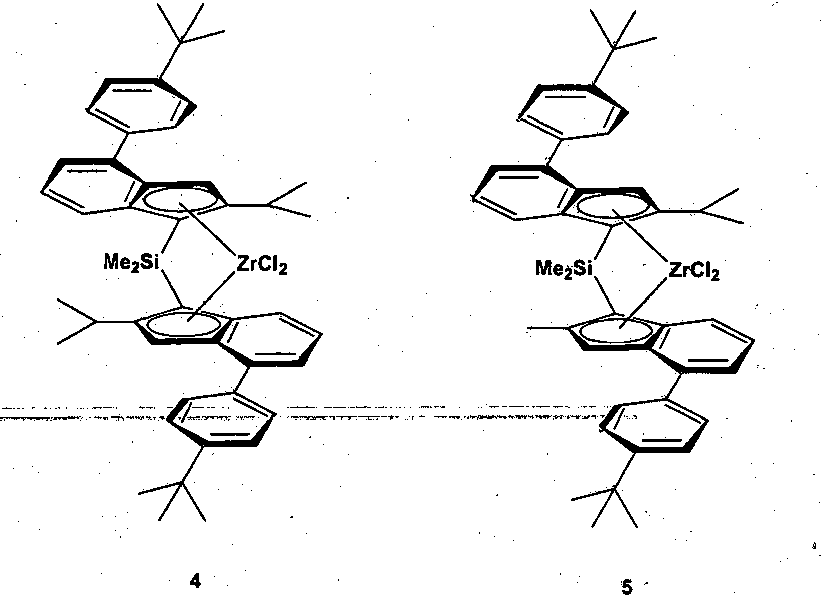

### Beispiel 1:

### Darstellung der geträgerten Katalysatoren

1. Aktivierung:
   In einem ausgeheizten Kolben unter Schutzgas werden 0.128 mmol Katalysator in 20 ml Toluol gelöst und mit 6 ml (28.8 mmol, 1.672 g) MAO (30% in Toluol) versetzt.
   Die Mischung wird für eine Stunde bei Raumtemperatur gerührt.
2. Trägerung:
   In einem ausgeheizten Kolben unter Schutzgas werden 6 g SiO₂ (Grace XPO 2107,
   getrocknet) vorgelegt und mit 30 ml abs. Toluol suspendiert. Es entsteht eine leicht rührbare Suspension, zu welcher anschließend der aktivierte Katalysator (aus 1.) gegeben wird. Es wird für 10 min nachgerührt und dann wird im Vakuum das Lösungsmittel bis zu einer Restfeuchte von max. 5% entfernt.

### Beispiele 2-6:

### Homopolymerisationen von Ethylen

In einem 2 I-Stahlautoklaven werden 1.5 I Exxsol vorgelegt und mit 15 mmol eines Aluminiumalkyls (z. B. Triisobutylaluminium) versetzt. Anschließend wird der Reaktor auf die gewünschte Temperatur gebracht und ein Ethylendruck von 7-15 bar aufgebaut. Zum Start der Polymerisation werden 9 µmol des jeweiligen Katalysators (siehe Tabelle 1) suspendiert in Exxsol zugegeben. Es wird für eine Stunde polymerisiert und die Reaktion wird durch Abbau des Ethylendrucks gestoppt. Das Polymer wird abfiltriert und im Vakuum bei 80°C getrocknet. Abschließend werden die Ausbeute und das Molekulargewicht bestimmt.

| **Beispiel** | **Katalysator** | **Druck C2** | **Temperatur** | **Ausbeute** | **Mᵥ** |
|---|---|---|---|---|---|
| 2 (Vergleich) | **1** | 10 bar | 70°C | 70 g | 0.7 x 10⁶g/mol |
| 3 | **2** | 10 bar | 70°C | 61 g | 2.2 x 10⁶ g/mol |
| 4 (Vergleich) | **3** | 10 bar | 70°C | 64 g | 1.1 x 10⁶ g/mol |
| 5 | **4** | 10 bar | 70°C | 98 g | 1.8 x 10⁶ g/mol |
| 6 | **5** | 10 bar | 70°C | 114 g | 2.7 x 10⁶ g/mol |

Es zeigt sich also, das es nur bei Verwendung der erfindungsgemäßen verbrückten Metallocen-Katalysatoren zur Bildung von ultrahochmolekularen Produkten kommt.

## Patentansprüche

1. Verfahren zur Herstellung von ultrahochmolekularen Homo- oder Co-Polymeren, umfassend hauptsächlich Ethylen mit einem viskosimetrisch ermittelten Molekulargewicht von größer 1x10⁶ g/mol durch Polymerisation von Ethylen unter Verwendung eines Katalysatorsystems, welches eine Verbindungen der Formel I umfasst 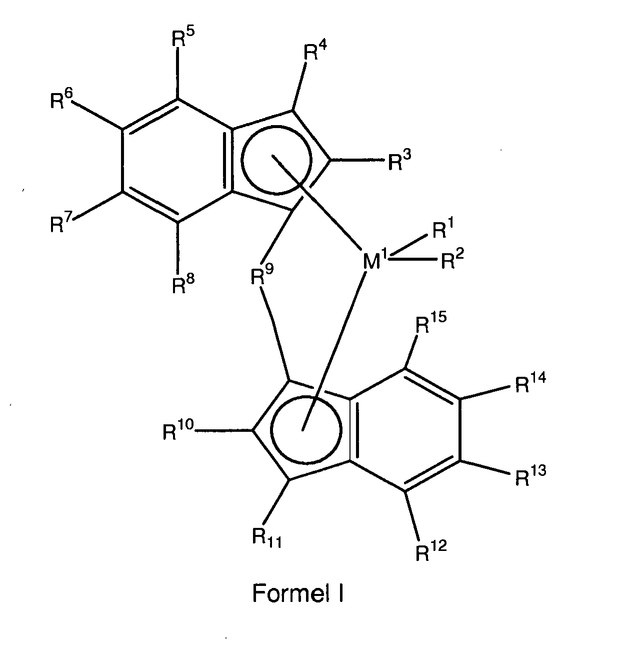 worin:
M¹ ein Übergangsmetall der 4. Gruppe des Periodensystems der Elemente bedeutet dessen Oxidationstufe ungleich null ist;
R¹ gleich Wasserstoff oder eine C₁-C₂₀ - kohlenstoffhaltige Gruppe oder ein Halogenatom ist;
R² gleich Wasserstoff oder eine C₁-C₂₀ - kohlenstoffhaltige Gruppe oder ein Halogenatom ist;
R³ eine C₂-C₂₀ -kohlenstoffhaltige Gruppe ist, **dadurch gekennzeichnet, dass** R³ eine in α- oder β-Position cyclisierte oder eine in α- oder β-Position verzweigte kohlenstoffhaltige Gruppe ist;
R¹⁰ eine C₁-C₁₀ -kohlenstoffhaltige Gruppe ist;
R⁴, R⁶, R⁷, R⁸, R¹¹, R¹³, R¹⁴, R¹⁵ jeweils gleich Wasserstoff ist;
R⁵, R¹² jeweils gleich oder verschieden sind und eine C₁-C₂₀ kohlenstoffhaltige Gruppe sind, und
R⁹ eine Brücke zwischen den Liganden bildet, welche durch folgende Formeln gebildet werden kann: 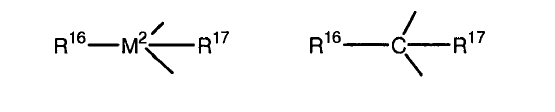 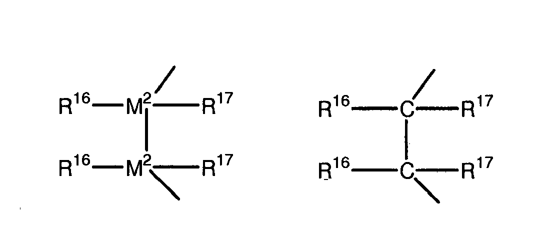
worin:
M² Silizium ist; und
R¹⁶, R¹⁷ jeweils gleich oder verschieden sind und gleich Wasserstoff oder eine C₁-C₂₀ - kohlenstoffhaltige Gruppe oder ein Halogenatom sind.

2. Verfahren gemäß Anspruch 1, **dadurch gekennzeichnet, dass** für die Verbindung der Formel I gilt, dass:
M¹ Zirkonium ist,
R¹, R² gleich sind und jeweils für Chlor, Methyl oder Phenolat stehen;
R³ eine Isopropyl-, Isobutyl-, Cyclopentyl-, Cyclohexyl-, tert-Butyl-, oder eine Phenyl-Gruppe ist;
R₁₀ eine C₁-C₆-kohlenstoffhaltige Gruppe ist, und eine Alkylgruppe ist
R⁴, R⁶, R⁷, R⁸, R¹¹, R¹³, R¹⁴, R¹⁵ jeweils gleich Wasserstoff ist;
R⁵, R¹² gleich sind und eine Phenylgruppe, welche in para-Position eine C₁-C₄ Alkylgruppe trägt ist; und
R⁹ eine Brücke zwischen den Liganden bildet, welche durch folgende Formeln gebildet werden kann: 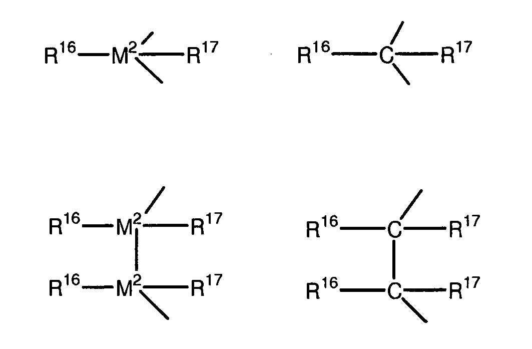
worin:
M² Silizium ist; und
R¹⁶, R¹⁷ jeweils gleich oder verschieden und gleich Wasserstoff oder eine C₁-C₂₀ - kohlenstoffhaltige Gruppe oder ein Halogenatom sind.

3. Verfahren gemäß einem der Ansprüche 1 oder 2, **dadurch gekennzeichnet, dass** das Katalysatorsystem mindestens einen Cokatalysator enthält.

4. Verfahren gemäß einem der Ansprüche 1 bis 3, **dadurch gekennzeichnet, dass** der Cokatalysator mindestens eine Lewis-Säure enthält.

5. Verfahren gemäß einem der Ansprüche 1 bis 3, **dadurch gekennzeichnet, dass** der Cokatalysator mindestens eine Verbindung vom Typ eines Aluminoxans enthält.

6. Verfahren gemäß einem der Ansprüche 1 bis 5, **dadurch gekennzeichnet, dass** die eingesetzte Verbindung der Formel I in Form eines Katalysatorsystems in geträgerter Form eingesetzt wird.

7. Verfahren gemäß Anspruch 1, **dadurch gekennzeichnet, dass** bei R⁵ und R¹² zwei oder mehrere untereinander ein cyclisches System bilden können.

8. Verfahren gemäß Anspruch 2, wobei R⁵ und R¹² gleich sind und eine Phenylgruppe enthalten, welche eine C₁-C₄-Alkylgruppe in der para-Position trägt.

9. Verfahren gemäß Anspruch 1, wobei die Verbindung der Formel I die folgende Struktur aufweist:

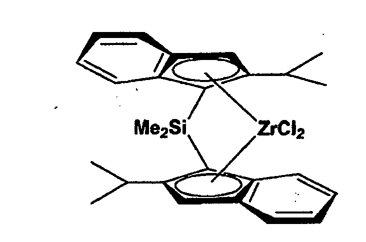

10. Verfahren gemäß Anspruch 1, wobei die Verbindung der Formel I die folgende Struktur aufweist:

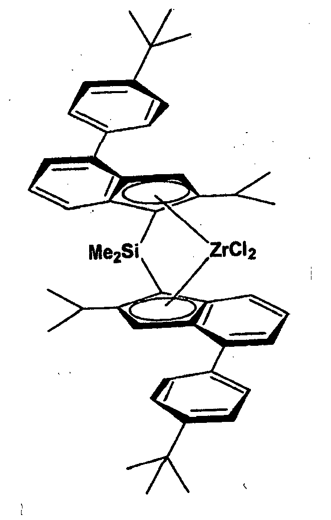

11. Verfahren gemäß Anspruch 1, wobei die Verbindung der Formel I die folgende Struktur aufweist:

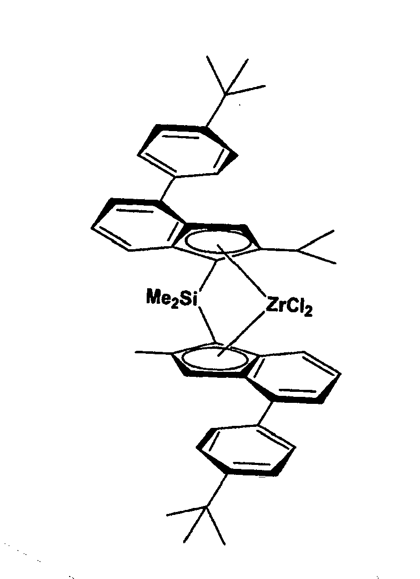

12. Verwendung eines Katalysatorsystem enthaltend mindestens eine Verbindung der Formel I gemäß Anspruch 1 und mindestens einen Cokatalysator zur Herstellung von ultrahochmolekularen Homo-oder Co-Polymeren auf Basis von Ethylen, wobei das Polymer ein viskosimetrisch ermitteltes Molekulargewicht von größer 1x10⁶ g/mol aufweist.

13. Verwendung gemäß Anspruch 12, **dadurch gekennzeichnet, dass** das Katalysatorsystem in geträgerter Form vorliegt.

## Claims

1. A process of manufacturing ultra-high molecular weight homopolymers or copolymers mainly comprising ethylene having a viscosimetrically determined molecular weight of greater than 1 x 10⁶ g/mol, wherein the process comprises polymerizing ethylene using a catalyst system which includes a compound of Formula I 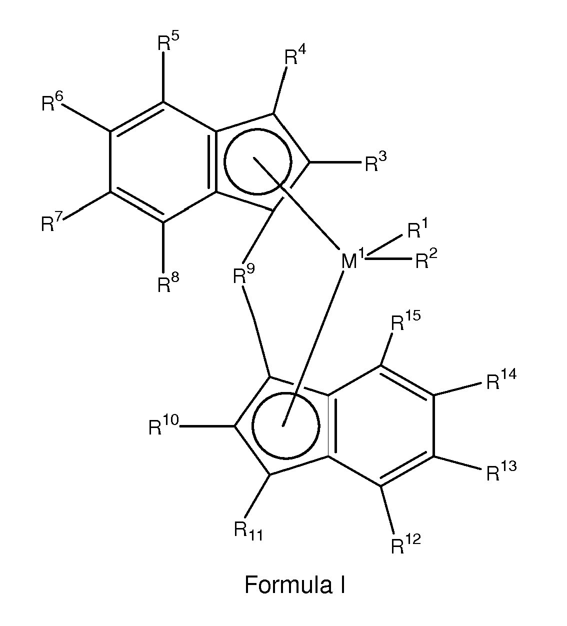 wherein:
M¹ is a transition metal of the 4^{th} group of the periodic table, wherein the oxidation level of said transition metal does not equal zero;
R¹ is equal to hydrogen or a C₁-C₂₀-carbonaceous group or a halogen atom;
R² is equal to hydrogen or a C₁-C₂₀ carbonaceous group or a halogen atom;
R³ is a C₂-C₂₀ carbonaceous group; wherein R³ is an α- or β- position branched carbonaceous group or a carbonaceous group cyclized in an α- or β-position.
R¹⁰ is a C₁-C₁₀ carbonaceous group;
R⁴, R⁶, R⁷, R⁸, R¹¹, R¹³, R¹⁴, R¹⁵ are each hydrogen;
R⁵, R¹² are identical or different and are a C₁-C₂₀ carbonaceous group; and
R⁹ is a bridge between the ligands, which is represented by the following formulas: 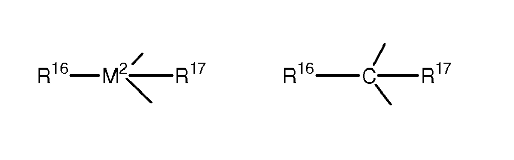 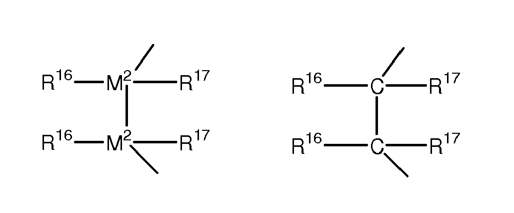
wherein:
M² is silicon; and
R¹⁶, R¹⁷ are each identical or different and are each hydrogen or a C₁-C₂₀ carbonaceous group or a halogen atom.

2. The process according to Claim 1, wherein for the compound of Formula I:
M¹ is zirconium;
R¹, R² are identical and are each chlorine, methyl or phenolate;
R³ is an isopropyl-, isobutyl-, cyclopentyl-, cyclohexyl-, tert-butyl-, or a phenyl group;
R¹⁰ is a C₁-C₆ carbonaceous group and is an alkyl group;
R⁴, R⁶, R⁷, R⁸, R¹¹, R¹³, R¹⁴ R¹⁵ are each hydrogen;
R⁵, R¹² are identical and a phenyl group which supports a C₁-C₄-alkyl group in para position; and
R⁹ is a bridge between the ligands, which is represented by the following formulas: 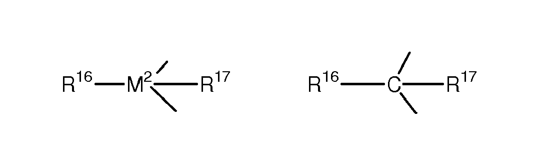 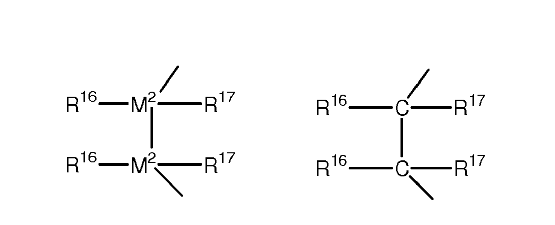
wherein:
M² is silicon; and
R¹⁶, R¹⁷ are each identical or different and are hydrogen or a C₁-C₂₀ carbonaceous group or a halogen atom.

3. The process according to claims 1-2, wherein the catalyst system further comprises at least one co-catalyst.

4. The process according to claims 1-3, wherein the co-catalyst comprises at least one Lewis acid.

5. The process according to claims 1-3, wherein the co-catalyst comprises at least one aluminoxane compound.

6. The process according to claims 1-5, wherein the compounds of Formula I are used in the form of a catalyst system in supported form.

7. The process according to claim 1, wherein in R⁵ and R¹² two or more can form a cyclic system.

8. The process according to claim 2, wherein R⁵ and R¹² are identical and include a phenyl group which supports a C₁-C₄ alkyl group in the para position.

9. The process according to Claim 1, wherein the compound of Formula I has a structure corresponding to the following formula:

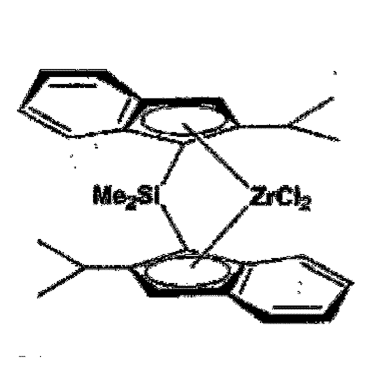

10. The process according to Claim 1, wherein the compound of Formula I has a structure corresponding to the following formula:

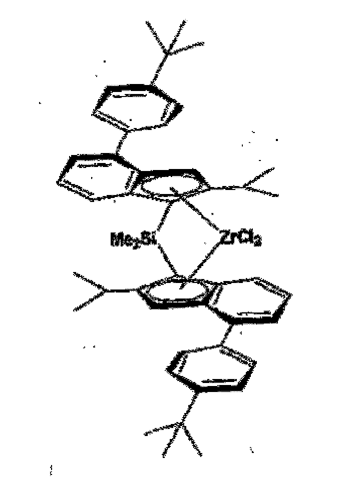

11. The process according to Claim 1, wherein the compound of Formula I has a structure corresponding to the following formula:

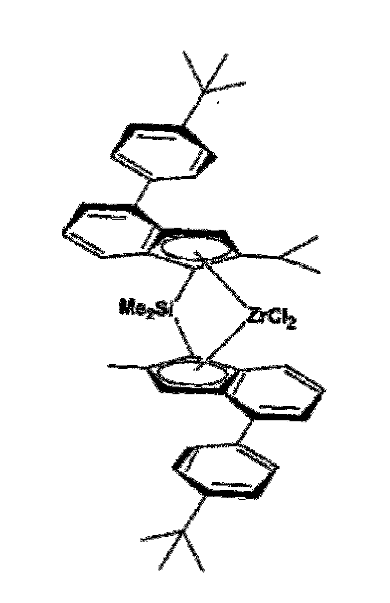

12. Use of a catalyst system comprising at least one compound of Formula I according to claim 1 and at least one co-catalyst for the production of ultrahigh molecular weight ethylene homopolymer or copolymers on the basis of ethylene, wherein the polymers have a viscosimetrically determined molecular weight of greater than 1 x 10⁶ g/mol.

13. The use of a catalyst system according to claim 12, wherein the catalyst system is present in supported form.

## Revendications

1. Procédé de production d'homopolymères ou de copolymères de poids moléculaire ultra-élevé, comprenant essentiellement de l'éthylène ayant un poids moléculaire déterminé par viscosimétrie de plus de 1x10⁶ g/mol par polymérisation d'éthylène au moyen d'un système catalyseur, qui comprend l'une des liaisons de la formule I 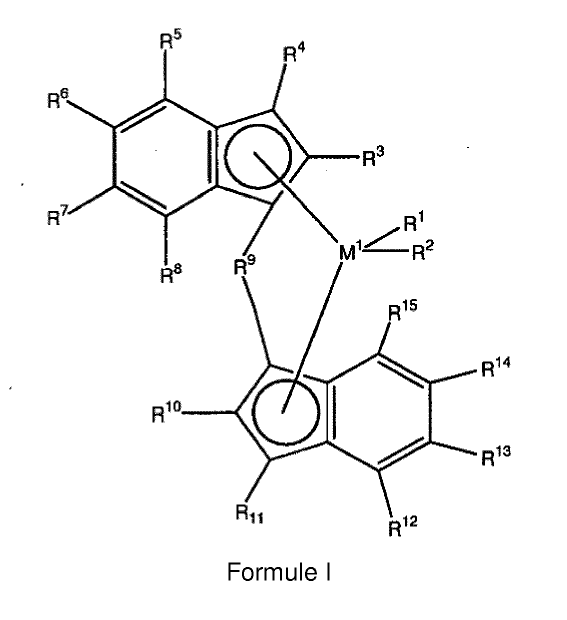 où :
M¹ est un métal de transition du 4e groupe du système périodique des éléments, c-à-d, que son degré d'oxydation est inégal à zéro ;
R¹ équivaut à de l'hydrogène ou un groupe carboné en C₁-C₂₀ ou un atome d'halogène ;
R² équivaut à de l'hydrogène ou un groupe carboné en C₁-C₂₀ ou un atome d'halogène ;
R³ est un groupe carboné en C₂-C₂₀, **caractérisé en ce que** R³ est un groupe carboné cyclisé en position α ou β ou ramifié en position α ou β ;
R¹⁰ est un groupe carboné en C₁-C₁₀ ;
R⁴, R⁶, R⁷, R⁸, R¹¹, R¹³, R¹⁴, R¹⁵ équivalent chacun à de l'hydrogène ;
R⁵, R¹² sont chacun identiques ou différents et sont un groupe carboné en C₁-C₂₀,
et
R⁹ forme un pont entre les ligands, lequel peut être formé par les formules suivantes : 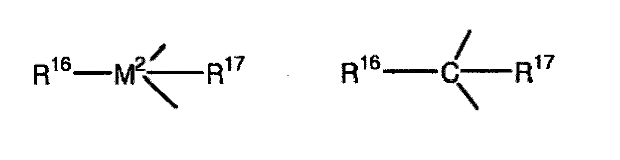 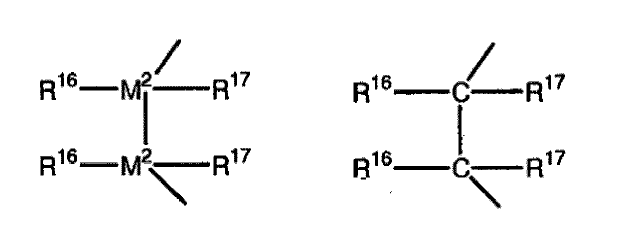
où :
M² est du silicium ; et
R¹⁶ , R¹⁷ sont chacun identiques ou différents et équivalent à de l'hydrogène ou un groupe carboné en C₁-C₂₀ ou un atome d'halogène.

2. Procédé selon la revendication 1, **caractérisé en ce que**, pour la liaison de la formule I, on a :
M¹ est du zirconium ;
R¹, R² sont identiques et représentent chacun du chlore, du méthyle ou du phénolate ;
R³ est un groupe isopropyle, isobutyle, cyclopentyle, cyclohexyle, tert-butyle ou
phényle ;
R¹⁰ est un groupe carboné en C₁-C₆, et un groupe alkyle ;
R⁴, R⁶, R⁷, R⁸, R¹¹, R¹³, R¹⁴, R¹⁵ équivalent chacun à de l'hydrogène ;
R⁵, R¹² sont identiques et représente un groupe phényle, lequel porte en position para un groupe alkyle en C₁-C₄ ; et
R⁹ forme un pont entre les ligands, lequel peut être formé par les formules suivantes : 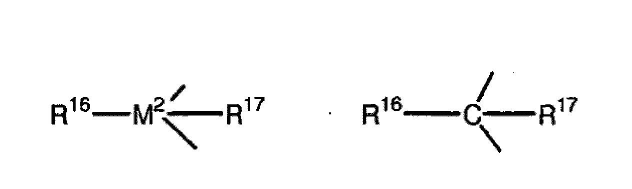 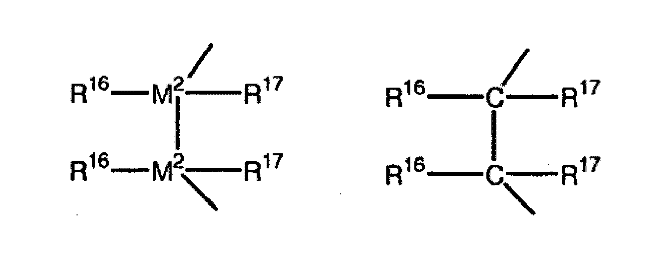 où :
M² est du silicium ; et
R¹⁶, R¹⁷ sont chacun identiques ou différents et équivalent à de l'hydrogène ou un groupe carboné en C₁-C₂₀ ou un atome d'halogène.

3. Procédé selon l'une des revendications 1 ou 2, **caractérisé en ce que** le système catalyseur contient au moins un cocatalyseur.

4. Procédé selon l'une des revendications 1 à 3, **caractérisé en ce que** le cocatalyseur contient au moins un acide de Lewis.

5. Procédé selon l'une des revendications 1 à 3, **caractérisé en ce que** le cocatalyseur contient au moins une liaison du type d'un aluminoxane.

6. Procédé selon l'une des revendications 1 à 5, **caractérisé en ce que** la liaison utilisée de la formule I est utilisée sous forme d'un système catalyseur sous forme supportée.

7. Procédé selon la revendication 1, **caractérisé en ce que**, dans le cas de R⁵ et de R¹², deux ou plusieurs peuvent former entre eux un système cyclique.

8. Procédé selon la revendication 2, dans lequel R⁵ et R¹² sont identiques et contiennent un groupe phényle, lequel porte en position para un groupe alkyle en C₁-C₄.

9. Procédé selon la revendication 1, dans lequel la liaison de la formule I présente la structure suivante :

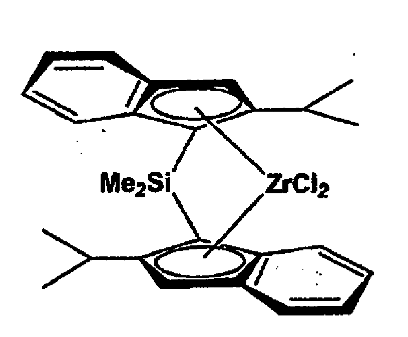

10. Procédé selon la revendication 1, dans lequel la liaison de la formule I présente la structure suivante :

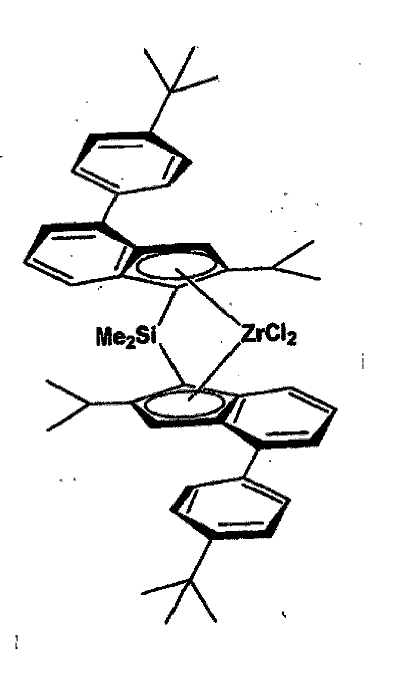

11. Procédé selon la revendication 1, dans lequel la liaison de la formule I présente la structure suivante :

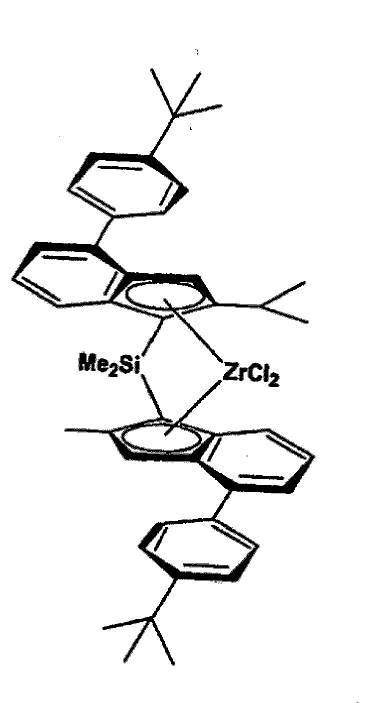

12. Utilisation d'un système catalyseur contenant au moins une liaison de la formule I selon la revendication 1 et au moins un cocatalyseur pour la fabrication d'homopolymères ou de copolymères de poids moléculaire ultra-élevé sur la base d'éthylène, sachant que le polymère présente un poids moléculaire déterminé par viscosimétrie de plus de 1x10⁶ g/mol.

13. Utilisation selon la revendication 12, **caractérisé en ce que** le système catalyseur est présent sous forme supportée.
